# EUROPEAN PATENT APPLICATION

(11) **EP 1 237 032 A2**
(43) Date of publication of application: **04.09.2002**
(21) Application number: 02100191.2
(22) Date of filing: 26.02.2002
(51) Int. Cl.: G02B 26/08

(54) **Optical micromirror assembly on a wireless network printed circuit board having in-package mirror position feedback**

(30) Priority: 26.02.2001 US 271936
(71) Applicant: Texas Instruments Incorporated, Dallas, Texas 75251 (US)
(72) Inventor: Turner, Arthur M., 75002, Allen (US); Orcutt, John W., 75080, Richardson (US)
(74) Representative: Holt, Michael

(57) **Abstract**

A printed circuit board micromirror assembly (10) is disclosed. The assembly (10) includes a mirror device (12) having a mirror surface (16) that can rotate in two axes. Actuation elements (14) are attached to the mirror device (12), to permit rotation of the mirror surface (16) responsive to the energizing of drivers (30). A spacer (22) connects between a printer circuit board (20) and mirror element (12) to permit sufficient movement of the mirror surface (16). In the alternative, the printed circuit board (20) includes a recess to form a gap to permit sufficient movement of the mirror surface (16). One or more sensors (40) are disposed under the mirror surface (16) to detect mirror orientation. According to another aspect of the invention, control circuitry is arranged under the mirror surface (16) to control the deflection of mirror element (36).

## Description

### Technical Field of the Invention

The present invention relates to the field of optical switching, and is more specifically directed to the switching of laser communication signals using micromirror assemblies.

### Background of the Invention

Modern data communications technologies have greatly expanded the ability to communicate large amounts of data over many types of communications facilities. This explosion in communications capability not only permits the communications of large databases, but has also enabled the digital communications of audio and video content. This high bandwidth communication is now carried out over a variety of facilities, including telephone lines (fiber optic as well as twisted-pair), coaxial cable such as supported by cable television service providers, dedicated network cabling within an office or home location, satellite links, and wireless telephony.

Each of these conventional communications facilities involves certain limitations in their deployment. In the case of communications over the telephone network, highspeed data transmission, such as that provided by digital subscriber line (DSL) services, must be carried out at a specific frequency range to not interfere with voice traffic, and is currently limited in the distance that such high-frequency communications can travel. Of course, communications over "wired" networks, including the telephone network, cable network, or dedicated network, requires the running of the physical wires among the locations to be served. This physical installation and maintenance is costly, as well as limiting to the user of the communications network.

Wireless communication facilities of course overcome the limitation of physical wires and cabling, and provide great flexibility to the user. Conventional wireless technologies involve their own limitations, however. For example, in the case of wireless telephony, the frequencies at which communications may be carried out are regulated and controlled; furthermore, current wireless telephone communication of large data blocks, such as video, is prohibitively expensive, considering the per-unit-time charges for wireless services. Additionally, wireless telephone communications are subject to interference among the various users within the nearby area. Radio frequency data communication must also be carried out within specified frequencies, and is also vulnerable to interference from other transmissions. Satellite transmission is also currently expensive, particularly for bi-directional communications (i.e., beyond the passive reception of television programming).

A relatively new technology that has been proposed for data communications is the optical wireless network. According to this approach, data is transmitted by way of modulation of a light beam, in much the same manner as in the case of fiber optic telephone communications. A photoreceiver receives the modulated light, and demodulates the signal to retrieve the data. As opposed to fiber optic-based optical communications, however, this approach does not use a physical wire for transmission of the light signal. In the case of directed optical communications, a line-of-sight relationship between the transmitter and the receiver permits a modulated light beam, such as that produced by a laser, to travel without the waveguide of the fiber optic.

It is contemplated that the optical wireless network according to this approach will provide numerous important advantages. First, high frequency light can provide high bandwidth, for example ranging from on the order of 100Mbps to several Gbps, using conventional technology. This high bandwidth need not be shared among users, when carried out over line-of-sight optical communications between transmitters and receivers. Without the other users on the link, of course, the bandwidth is not limited by interference from other users, as in the case of wireless telephony. Modulation can also be quite simple, as compared with multiple-user communications that require time or code multiplexing of multiple communications. Bi-directional communication can also be readily carried out according to this technology. Finally, optical frequencies are not currently regulated, and as such no licensing is required for the deployment of extra-premises networks.

These attributes of optical wireless networks make this technology attractive both for local networks within a building, and also for external networks. Indeed, it is contemplated that optical wireless communications may be useful in data communication within a room, such as for communicating video signals from a computer to a display device, such as a video projector.

It will be apparent to those skilled in the art having reference to this specification that the ability to correctly aim the transmitted light beam to the receiver is of importance in this technology. Particularly for laser-generated collimated beams, which can have quite small spot sizes, the reliability and signal-to-noise ratio of the transmitted signal are degraded if the aim of the transmitting beam strays from the optimum point at the receiver. Especially considering that many contemplated applications of this technology are in connection with equipment that will not be precisely located, or that may move over time, the need exists to precisely aim and controllably adjust the aim of the light beam.

United States Patent 6,295,154, entitled "Optical Switching Apparatus", now U.S. Patent 6,295,154, commonly assigned herewith, discloses a micromirror assembly for directing a light beam in an optical switching apparatus. As disclosed in this application, the micromirror reflects the light beam in a manner that may be precisely controlled by electrical signals. As disclosed in this patent application, the micromirror assembly includes a silicon mirror capable of rotating in two axes. One or more small magnets are attached to the micromirror itself; a set of four coil drivers are arranged in quadrants, and are current-controlled to attract or repel the micromirror magnets as desired, to tilt the micromirror in the desired direction.

Because the directed light beam, or laser beam, has an extremely small spot size, precise positioning of the mirror to aim the beam at the desired receiver is essential in establishing communication. This precision positioning is contemplated to be accomplished by way of calibration and feedback, so that the mirror is able to sense its position and make corrections.

One technique for providing a micromirror assembly utilizes a package that is molded around a plurality of coil drivers, and their control wiring, for example by injection or transfer molding. A two-axis micromirror and magnet assembly is attached to a shelf overlying the coil drivers. Underlying the mirror is a sensor for sensing the angular position of the mirror. The molded package or housing is not the most cost effective solution and the molded package is sizable.

Thus, there exists a need for a micromirror assembly and method of manufacturing such assembly that is relatively simpler, smaller and lower in cost than the molded package in the previous approach.

### Summary of the Invention

A printed circuit board micromirror assembly disclosed includes a printed circuit board having a recess. Other substrates or mountings can be utilized. The assembly includes a mirror element having a mirror surface, or other optical component such as an optical grating, that can pivot in one or more axes. Actuation elements are attached to the mirror element, to permit pivoting of the mirror surface responsive to the energizing of drivers. A spacer connects between a printer circuit board and mirror element to permit sufficient movement of the mirror surface. In the alternative, the printed circuit board includes a recess to form a gap to permit sufficient movement of the mirror surface. A sensor is disposed under the mirror surface to detect mirror orientation. According to another aspect of the invention, control circuitry is arranged under the mirror surface to control the deflection of mirror element.

### Brief Description of the Drawings

For a more complete understanding of the present invention and the advantages thereof, reference is now made to the following description taken in conjunction with the accompanying drawings in which like reference numbers indicate like features and wherein:
Figure 1 is a plan view of a mirror element using the printed circuit board according to an embodiment of the invention;
Figures 2a and 2b are cross-sectional views C-C of the mirror element of Figure 1, illustrating its operation; and
Figures 2c and 2d are cross-sectional views D-D of the mirror element of Figure 1, illustrating its operation.
Figure 3 is a schematic representation of a data transmission system incorporating the present invention.

### Detailed Description of the Illustrative Embodiments

The present invention will be described in connection with its preferred embodiments, with an example of an application of this embodiment in a communications network. It is contemplated, however, that the present invention may be realized not only in the manner described below, but also by way of various alternatives which will be apparent to those skilled in the art having reference to this specification. It is further contemplated that the present invention may be advantageously implemented and used in connection with a variety of applications besides those described below. It is therefore to be understood that the following description is presented by way of example only, and that this description is not to be construed to limit the true scope of the present invention as hereinafter claimed.

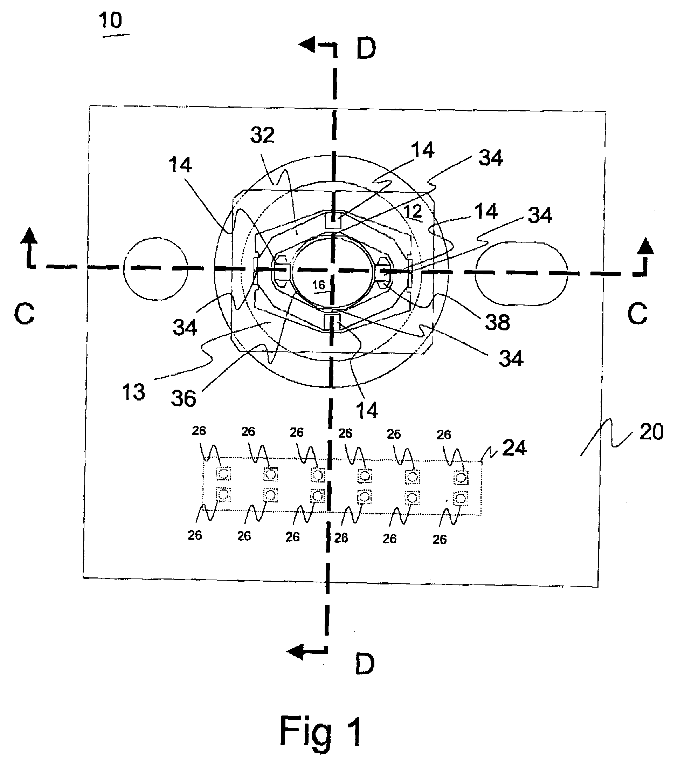

As shown in Figure 1, micromirror assembly 10 according to an embodiment of the invention will now be described. A mirror device 12 is preferably formed of a single piece of material, most preferably single-crystal silicon, photolithographically etched in the desired pattern, to form mirror surface 16 and its supporting torsional hinges 34, gimbals portion 32, and frame 13. To improve the reflectivity of mirror surface 16, it is preferably plated with a metal, such as gold or aluminum. According to another aspect of the invention, the mirror surface could be replaced by an optical grating. In its assembled form, as shown, four pairs of actuation elements 14 are attached to mirror element 36, at a 90° relative orientation from one another, to provide the appropriate rotation. Actuation elements 14 may be formed of any permanently magnetizable material, a preferred example of which is neodymium-iron-boron, or electrodes for electrostatic actuation .

Mirror device 12 includes a frame portion 13, an intermediate gimbals portion 32, and an inner mirror element 36, all preferably formed from one piece of crystal material such as silicon. In its fabrication, silicon is etched to provide outer frame portion 13 forming an opening in which intermediate annular gimbals portion 32 is attached at opposing hinge locations 34 along first axis C-C. Inner, centrally disposed mirror element 36, having a mirror surface 16 centrally located thereon, is attached to gimbals portion 32 at hinge portions 34 on a second axis D-D, 90 degrees from the first axis C-C. Mirror surface 16, which is on the order of 100 microns in thickness, is suitably polished on its upper surface to provide a specular surface. Preferably, this polished surface is plated with a metal, such as aluminum or gold, to provide further reflectivity. In order to provide necessary flatness, the mirror is formed with a radius of curvature greater than approximately 2 meters. The radius of curvature can be controlled by known stress control techniques such as, by polishing on both opposite faces and deposition techniques for stress controlled thin films. If desired, a coating of suitable material can be placed on the mirror portion to enhance its reflectivity for specific radiation wavelengths.

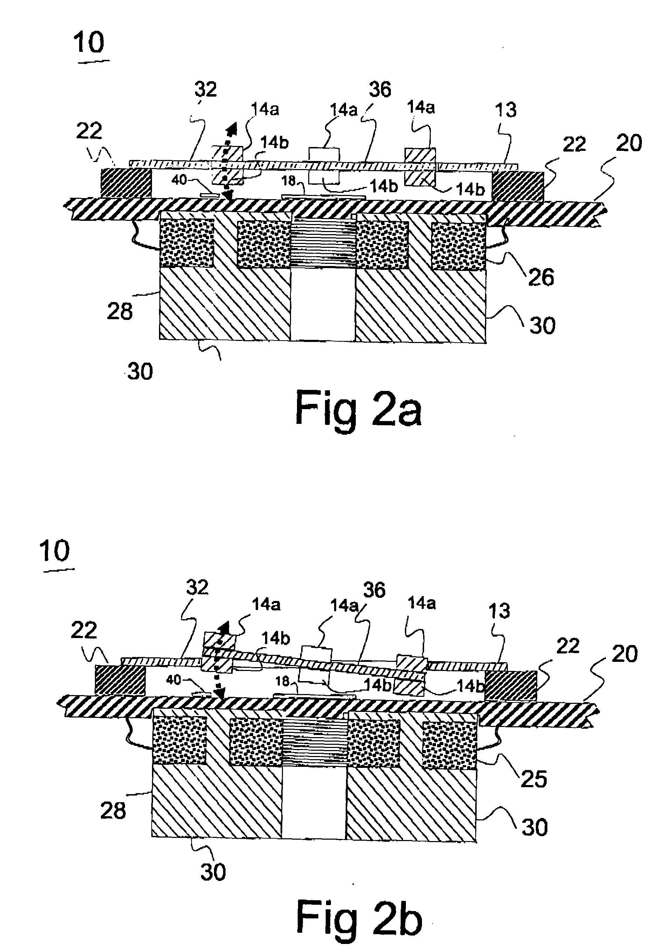

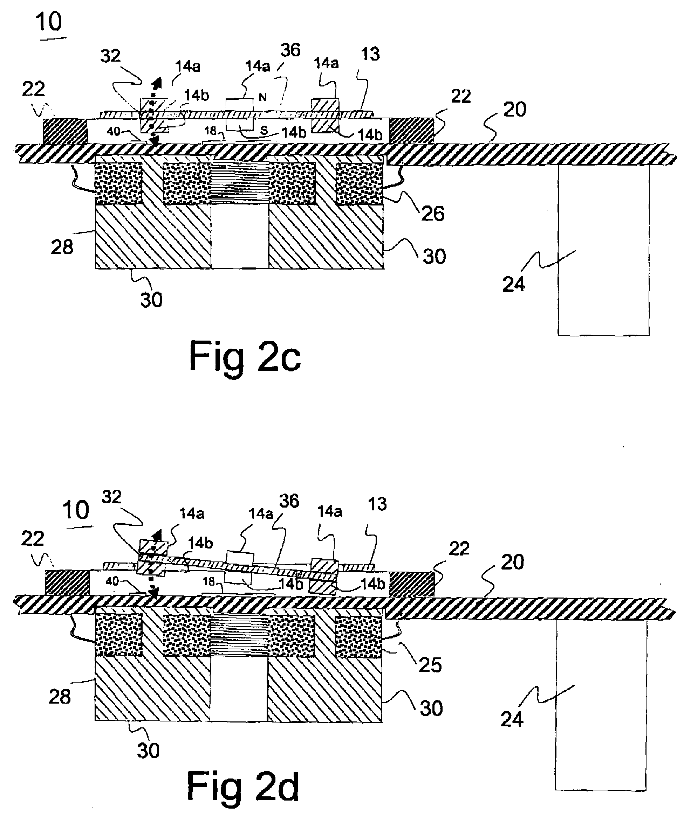

Mirror device 12 includes a first set of two pair of permanent magnets 14 mounted on gimbals portion 32 along the second axis D-D, and a second set of two pair of permanent magnets 14 mounted on extensions 38, which extend outwardly from mirror element 36 along the first axis C-C. In order to symmetrically distribute mass about the two axes of rotation to thereby minimize oscillation under shock and vibration, each permanent magnet 14 preferably comprises a set of an upper magnet 14a mounted on the top surface of the mirror element 36 using conventional attachment techniques such as epoxy bonding, and an aligned lower magnet 14b similarly attached to the lower surface of the mirror assembly as shown in Figures 2a through 2d. The magnets of each set are arranged serially such as the north/south pole arrangement indicated in Figure 2c. There are several possible arrangements of the four sets of magnets which may be used, such as all like poles up, or two sets of like poles up, two sets of like poles down; or three sets of like poles up, one set of like pole down, depending upon magnetic characteristics desired.

By attaching gimbals portion 32 to frame portion 13 by means of hinges 34, motion of the gimbals portion 32 about the first axis C-C is provided and by attaching mirror portion 36 to gimbals portion 32 via hinges 34, motion of the mirror element relative to the gimbals portion is obtained about the second axis D-D, thereby allowing independent, selected movement of the mirror element 36 along two different axes.

The middle or quiescent position of mirror element 36 is shown in Figure 2a, which is a section taken through the assembly along line C-C of Figure 1. Rotation of mirror element 36 about axis D-D independent of gimbals portion 32 and/or frame 13 is shown in Figure 2b as indicated by the arrow. Figure 2c shows the middle position of the mirror element 36, similar to that shown in Figure 2a, but taken along line D-D of Figure 1. Rotation off the gimbals portion 32 and mirror element 36 about axis C-C independent of frame 13 is shown in Figure 2d as indicated by the arrow. The above independent rotation of mirror surface 16 of mirror element 36 about the two axes allows direction of the optical beam as needed by the application.

Mirror device 12, in this embodiment of the invention, rests upon and is attached to printed circuit board 20. It is highly preferred that the dimension and location of printed circuit board 20 with respect to mirror device 12 as well as the recess within the printed circuit board 20, be selected so that the maximum deflection of mirror element 36 is stopped by one of magnets 14 without mirror element 36 itself impacting the upper surface of the printed circuit board 20. In the alternative, a spacer 22 may be attached to the printed circuit board 20 to form a gap between the mirror device 12 and the printed circuit board 20. Additionally, it is preferred that the maximum deflection of mirror element 36 is limited, by printed circuit board 20, to an angle that is well below that which overstresses hinges 34.

As shown in the cross-section of Figure 2a, packaged micromirror assembly 10 includes position sensing circuitry having four detectors (40) and a light source (18) physically disposed between mirror device 12 and circuit board 20, and thus in close proximity to mirror element 36. Detectors 40 and light source 18 are preferably mounted to printed circuit board 20 prior to the attachment of mirror device 12. The position sensing circuitry could alternatively have 4 light sources located in the position of detectors 40 and a single detector located in the position of light source 18. Detectors 40 are electrically connected by leads (not shown) to connector nodes 26 of connector 24, to provide electrical signals to external circuitry in a transmitter optical module (not shown) that electrically couples to the micromirror assembly 10 in accordance with the present invention. In this example, therefore, printed circuit board micromirror assembly 10 provides position sensing signals to control circuitry on leads (not shown), and receives position input signals on leads (not shown). The complete feedback sensing and control response is thus provided within printed circuit board micromirror assembly 10 itself, according to the present invention.

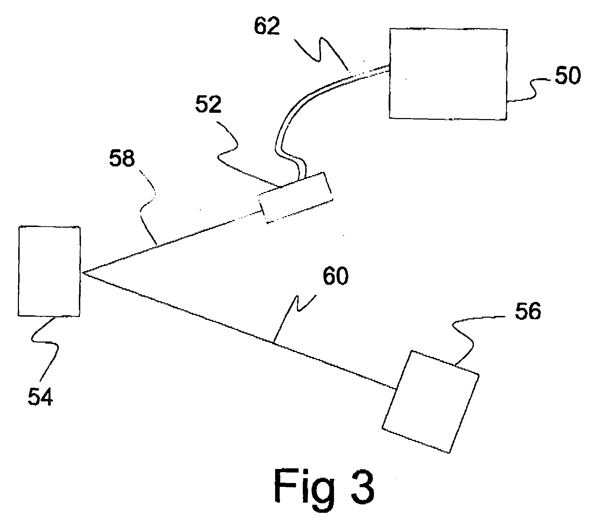

Fig. 3 illustrates a data transmission system utilizing the micromirror assembly of the present invention. In Fig. 3, data for transmission is coupled from a data source 50 to a light source 52 via cable 62. The data source can be a computer, for example. The light source is preferably a laser. The data is used to modulate the light beam which is then transmitted to a receiver 56 at a remote location. In order to align the light beam 58 carrying data with the receptor (not shown) on the receiver, the light beam is reflected off of a micromirror assembly 54 of the present invention and the orientation of the mirror is adjusted to align the reflected light beam 60 with the receptor.

While the present invention has been described according to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings. One such modification is to utilize electrostatic actuation for the mirror position in place of the electromagnetic actuators shown. It is contemplated that such modifications and alternatives are within the scope of this invention as subsequently claimed herein.

## Claims

1. A packaged micromirror assembly, comprising:
a mirror device having a frame portion, a mirror portion, and a plurality of hinges;
at least one actuation element attached to the mirror portion; and
a mounting having a recess, the mirror device coupled to the mounting in overlying relation to the recess to enable movement of the mirror portion.

2. The micromirror assembly of Claim 1 further comprising a plurality of drivers, in proximity to the at least one actuation element, for orienting the mirror portion.

3. A packaged micromirror assembly as recited in claim 1 or 2, wherein the actuating element is a permanent magnet and the driver is an electromagnetic coil.

4. In a data transmission system, a data transmitter coupled to a data source for generating data to be communicated to a receiver comprising:
a light source, coupled to the data source, for generating a modulated directed light beam; and
a micromirror assembly for directing the directed light beam at the receiver, comprising:
a mirror device, the mirror device having a frame, a mirror surface, and a plurality of hinges;
at least one actuation element attached to the mirror device;
a mounting having a recess, the mirror device coupled to the mounting in overlying relation to the recess to enable movement of the mirror surface; and
a plurality of drivers, in proximity to the at least one actuation element, for orienting the mirror surface.

5. An electronic system of any one of the preceding claims, further comprising:
a sensor, disposed beneath the mirror element and connected to the printed circuit board, for detecting the orientation of the mirror.

6. The system of Claim 5, wherein the sensor comprises:
at least one light source for illuminating an underside of the mirror surface; and
at least one detector for detecting light imparted by the at least one light source and reflected from the underside of the mirror surface;
wherein the combination of the at least one light source and at least one detector provide a plurality of reflection paths over which the intensity of reflected light is measured.

7. The system according to any one of the preceding Claims further comprising a gimbal.

8. The micromirror assembly of any one of the preceding claims wherein the mirror device is formed of a single piece of crystalline material.

9. The micromirror assembly of any one of the preceding claims wherein the mounting is a printed circuit board.

10. The micromirror assembly of any one of the preceding claims wherein the recess on the printed circuit board is formed by a spacer for spacing the mirror device from the printed circuit board, the spacing determining the maximum rotation of the mirror portion.

11. A packaged optical assembly, comprising:
an optical device having a frame portion, an optical component portion, and a plurality of hinges;
at least one actuation element attached to the optical component portion; and
a mounting having a recess, the optical device coupled to the mounting in overlying relation to the recess to enable movement of the optical component portion.
